# EUROPÄISCHE PATENTSCHRIFT

(11) **EP 1 996 852 B1**
(45) Veröffentlichungstag und Bekanntmachung des Hinweises auf die Patenterteilung: **10.04.2013**
(21) Anmeldenummer: 07703086.4
(22) Anmeldetag: 27.01.2007
(51) Int. Cl.: F15B 21/00, F15B 15/20, F16L 55/033

(54) **ANSCHLUSSVORRICHTUNG FÜR DRUCKLUFTLEITUNGEN SOWIE DAMIT AUSGESTATTETE PNEUMATIKZYLINDERANORDNUNG**
CONNECTION DEVICE FOR COMPRESSED AIR LINES AND PNEUMATIC RAM ARRANGEMENT EQUIPPED THEREWITH
DISPOSITIF DE RACCORDEMENT POUR CONDUITES D'AIR COMPRIMÉ ET SYSTÈME DE VÉRIN PNEUMATIQUE QUI EN EST ÉQUIPÉ

(30) Priorität: 17.03.2006 DE 202006004405 U
(43) Veröffentlichungstag der Anmeldung: 03.12.2008
(73) Patentinhaber: FESTO AG & Co. KG, 73734 Esslingen (DE)
(72) Erfinder: KRIWET, Ansgar, 73760 Ostfildern (DE); QUENDT, Volker, 72669 Unterensingen (DE); DANNER, Tobias, 73760 Ostfildern (DE)
(74) Vertreter: Abel, Martin
(86) Internationale Anmeldenummer: PCT/EP2007/000710
(87) Internationale Veröffentlichungsnummer: WO 2007/107199

(56) Entgegenhaltungen:
- EP-A- 1 580 476
- EP-A1- 1 369 633
- EP-A1- 1 602 834
- DE-A1- 2 722 269
- DE-A1-102005 001 387
- US-A- 4 651 625
- US-B1- 6 296 015

## Beschreibung

Die Erfindung betrifft eine Anschlussvorrichtung zum Anschließen mindestens einer Druckluftleitung an eine pneumatische Komponente, beispielsweise einen Pneumatikzylinder, mit einem sich in Richtung einer Befestigungsachse erstreckenden, zur Fixierung an der pneumatischen Komponente dienenden und gleichzeitig mindestens einen Luftführungskanal definierenden Befestigungsteil, und mit einem in einer zu der Befestigungsachse rechtwinkeligen Hauptachse von dem Befestigungsteil wegragenden, mindestens eine Leitungsanschlussöffnung für eine anzuschließende Druckluftleitung aufweisenden Funktionsteil, das Flachgestalt aufweist, mit einer zu der Befestigungsachse rechtwinkeligen Hauptausdehnungsebene und das mit mindestens einer mindestens ein Steuerventilglied aufweisenden Steuerventileinrichtung und mit mindestens einem Entlüftungskanal der Steuerventileinrichtung zugeordneten Schalldämpfmitteln ausgestattet ist, wobei die Steuerventileinrichtung ein unmittelbarer Bestandteil des Funktionsteils ist und das mindestens eine Steuerventilglied im Innern des Funktionsteils angeordnet ist, und wobei als Schalldämpfmittel mindestens ein plattenförmiger Flächenschalldämpfer vorhanden ist. Ferner betrifft die Erfindung eine mit mindestens einer solchen Anschlussvorrichtung ausgestattete Pneumatikzylinderanordnung.

Eine aus der US 4651625 bekannte Anschlussvorrichtung ist über eine der Luftführung dienende Befestigungsschraube an die Außenseite eines Pneumatikzylinders angebaut. An der Schmalseite ihres Funktionsteils befinden sich eine Leitungsanschlussöffnung zur Einspeisung von Druckluft und ein abstehender zylindrischer Schalldämpfer zur Minderung des Geräusches der ausströmenden Druckluft. An eine der in der Achsrichtung der Befestigungsschraube weisenden Flachseiten des Funktionsteils ist eine indirekt elektrisch betätigbare Steuerventileinrichtung angebaut. Neben den zweifellos vorhandenen Vorteilen dieser Anschlussvorrichtung kann als Nachteil vor allem die relativ viel Platz beanspruchende voluminöse Bauweise genannt werden.

Zum Anbau an Pneumatikzylinder geeignete Anschlussvorrichtungen für Druckluftleitungen, die ein Flachgestalt aufweisendes Funktionsteil enthalten, sind auch aus der EP 1602834 A1 und der EP 1580476 A1 bekannt. Diese enthalten jedoch keine Steuerventileinrichtung. Für die Ansteuerung eines Pneumatikzylinders ist daher eine zusätzliche externe Steuerventileinrichtung erforderlich.

Weitere Anschlussvorrichtungen für Druckluftleitungen offenbaren auch die US 6296015 B1 und die EP 1369633 A1.

Aus der DE 27 22 269 A1 ist eine Anschlussvorrichtung der eingangs genannten Art bekannt, die mittels einer Befestigungsschraube befestigt ist und die an einer rechtwinkelig zur Längsachse der Befestigungsschraube ausgerichteten Seite einen plattenförmigen Flächenschalldämpfer aufweist, dessen Plattenebene parallel zur Längsachse der Befestigungsschraube verläuft.

Es ist eine Aufgabe der vorliegenden Erfindung, eine kompakt bauende und relativ wenig Platz beanspruchende Anschlussvorrichtung der eingangs genannten Art zu schaffen.

Zur Lösung dieser Aufgabe ist vorgesehen dass das Funktions teil quer zu seiner Hauptachse einen länglichen Querschnitt aufweist, wobei die Querschnitts-Längsachse rechtwinkelig zur Befestigungsachse verläuft, dass der plattenförmige Flächenschalldämpfer mindestens an einer der beiden in Achsrichtung der Befestigungsachse orientierten Flachseiten des Funktionsteils angeordnet ist, wobei sich seine Plattenebene zumindest annähernd parallel zu der Hauptausdehnungsebene erstreckt, und dass die Steuerventileinrichtung direkt oder indirekt elektrisch betätigbar ausgebildet ist.

Durch die Integration der direkt oder indirekt elektrisch betätigbaren Steuerventileinrichtung in das Funktionsteil bleibt dessen Flachgestalt erhalten, verbunden mit einer aufgrund seines länglichen Querschnitts in Richtung der Befestigungsachse geringen Bauhöhe. Dadurch ergeben sich im an eine pneumatische Komponente angebauten Zustand kompakte Gesamtabmessungen. Der erforderliche Einbauraum ist nur unwesentlich größer als bei konventionellen pneumatischen Komponenten. Ein weiterer Faktor zu Gunsten der geringen Abmessungen ist der Wegfall eines zur Seite wegragenden zylindrischen Schalldämpfers. An seine Stelle treten ein oder mehrere plattenförmige Flächenschalldämpfer, die an den in Achsrichtung der Befestigungsachse orientierten Flachseiten des Funktionsteils angeordnet sind und daher sehr gut in die flache Außenkontur integriert werden können. Entsprechend dem zu entlüftenden Volumen können ein oder mehrere Flächenschalldämpfer an nur einer oder gleichzeitig an beiden Flachseiten des Fünktionsteils angeordnet sein.

Vorteilhafte Weiterbildungen der Erfindung gehen aus den Unteransprüchen hervor.

Befindet sich an beiden Flachseiten je mindestens ein Flächenschalldämpfer, kann dieser mit ein und demselben Entlüftungskanal der Steuerventileinrichtung kommunizieren. Sind mehrere Entlüftungskanäle vorhanden, können diese Entlüftungskanäle jeweils gleichzeitig zu beiden Flächenschalldämpfern oder nur zu jeweils einem davon führen.

Eine optimale Anströmung des jeweiligen Flächenschalldämpfers ist gewährleistet, wenn dieser eine mit dem zugeordneten Entlüftungskanal in Verbindung stehende Abluftkammer überdeckt, die, parallel zur Hauptausdehnungsebene gemessen, zweckmäßigerweise eine Querschnittsfläche aufweist, die zumindest annähernd der vom Flächenschalldämpfer überdeckten Fläche entspricht.

Auf jeden Fall von Vorteil ist eine Ausgestaltung des Flächenschalldämpfers dahingehend, dass er sich zumindest annähernd über die gesamte rechtwinkelig zur Hauptachse gemessene Breite der ihm zugeordneten Flachseite erstreckt. Dadurch kann ein relativ großer Ausströmquerschnitt für die Abluft zur Verfügung gestellt werden.

Bei dem Flächenschalldämpfer kann es sich beispielsweise um eine poröse Dämpfungsmaterialplatte handeln, die insbesondere aus Sintermaterial besteht. Er kann allerdings auch mattenartig ausgeführt sein und dabei insbesondere aus einer flexiblen Schalldämpfmatte geeigneten Materials bestehen.

Besonders einfach lässt sich der Flächenschalldämpfer mit einer ihn überdeckenden Abdeckung am Funktionsteil fixieren. Die Abdeckung ist luftdurchlässig, beispielsweise mit Schlitzen versehen, um die Abluftströmung nicht unnötig zu behindern.

Das Funktionsteil kann an seinen beiden Flachseiten durchaus leicht gewölbt sein oder eine leicht unregelmäßige Kontur aufweisen. Besonders vorteilhaft ist jedoch eine Gestaltung dahingehend, dass es an den Flachseiten eine zur Hauptausdehnungsebene im Wesentlichen parallele Außenfläche besitzt.

Eine besonders kompakte Anordnung ergibt sich, wenn zumindest das wenigstens eine Steuerventilglied der Steuerventileinrichtung in einem Bereich im Innern des Funktionsteils angeordnet ist, wo es in der zur Befestigungsachse parallelen Höhenrichtung des Funktionsteils unterhalb des oder der Flächenschalldämpfer(s) platziert ist. Dadurch können auch besonders kurze Entlüftungswege realisiert werden.

Beinhaltet das Funktionsteil zusätzlich eine insbesondere zur Abluftdrosselung eingesetzte Drosseleinrichtung mit einstellbarer Drosselschraube, empfiehlt es sich, auch diese Drosselschraube unterhalb des oder der Flächenschalldämpfer(s) anzuordnen. Sind an beiden Flachseiten Flächenschalldämpfer vorhandeln, ergibt sich somit eine Art Sandwich-Anordnung, bei der das Steuerventilglied und auch die gegebenenfalls vorhandene Drosselschraube gemeinsam zwischen wenigstens zwei plattenförmigen Flächenschalldämpfern liegen.

Die Steuerventileinrichtung kann mindestens ein 3/2-Wegeventil aufweisen. Um höhere Ventilfunktionalitäten zu erreichen, beispielsweise eine 5/2-Ventilfunktionalität, kann sich die Steuerventileinrichtung aber auch beispielsweise aus zwei funktionell miteinander gekoppelten 3/2-Wegeventilen zusammensetzen.

Besonders vorteilhaft ist eine Ausgestaltung der Steuerventileinrichtung als vorgesteuerte Steuerventileinrichtung, wobei sie unter Vermittlung mindestens eines elektrisch betätigbaren Vorsteuerventils indirekt elektrisch betätigbar ist. Dieses Vorsteuerventil ist zweckmäßigerweise ebenfalls ein unmittelbarer Bestandteil des Funktionsteils und ist vorzugsweise so platziert, dass es - bei mit der Hauptachse zusammenfallender Blickrichtung - innerhalb des Umrisses des Flachgestalt aufweisenden Funktionsteils liegt.

In vorteilhafter Weise kann das Funktionsteil modular aufgebaut sein. Es enthält dann insbesondere ein dem Befestigungsteil zugeordnetes Befestigungsmodul, ein die mindestens eine Leitungsanschlussöffnung aufweisendes Anschlussmodul und ein zwischen diesen beiden Modulen angeordnetes, die Steuerventileinrichtung enthaltendes Steuermodul. Eine gegebenenfalls vorhandene Drosseleinrichtung ist zweckmäßigerweise ebenfalls Bestandteil des Steuermoduls. Das gegebenenfalls vorhandene Vorsteuerventil ist zweckmäßigerweise Bestandteil des Anschlussmoduls. Der mindestens eine Flächenschalldämpfer ist vorzugsweise nur an dem Steuermodul angeordnet.

Ein Pneumatikzylinder kann, insbesondere in Abhängigkeit von der ventiltechnischen Ausstattung der Anschlussvorrichtung, mit nur einer oder gleichzeitig mit zwei Anschlussvorrichtungen ausgestattet sein. Die Befestigung erfolgt über das zweckmäßigerweise als Befestigungsschraube ausgebildete Befestigungsteil, das unter Gewährleistung der Luftführungsfunktion im Bereich eines zur Außenfläche des Zylindergehäuses ausmündenden Druckluftkanals fixierbar ist.

Nachfolgend wird die Erfindung anhand der beiliegenden Zeichnung näher erläutert. In dieser zeigen:
- Figur 1: einen exemplarisch mit zwei Anschlussvorrichtungen der erfindungsgemäßen Art ausgestatteten Pneumatikzylinder einer erfindungsgemäßen Pneumatikzylinderanordnung in perspektivischer Darstellung,
- Figur 2: eine der gemäß Figur 1 an den Pneumatikzylinder angebaute Anschlussvorrichtungen in perspektivischer Einzeldarstellung,
- Figur 3: die Anschlussvorrichtung aus Figur 2 in einer stirnseitigen Vorderansicht mit Blickrichtung gemäß Pfeil III,
- Figur 4: eine Draufsicht der Anschlussvorrichtung mit Blickrichtung gemäß Pfeil IV aus Figur 2,
- Figur 5: eine Seitenansicht der Anschlussvorrichtung mit Blickrichtung gemäß Pfeil V aus Figur 2,
- Figur 6: die aus Figur 2 ersichtliche Anschlussvorrichtung in perspektivischer Darstellung im aufgeschnittenen Zustand,
- Figur 7: einen Längsschnitt durch die Anschlussvorrichtung gemäß Schnittlinie VII-VII aus Figuren 4 und 8,
- Figur 8: einen bezüglich Figur 7 um 90° gedrehten Längsschnitt durch die Anschlussvorrichtung gemäß Schnittlinie VIII-VIII aus Figur 5 und Figur 10,

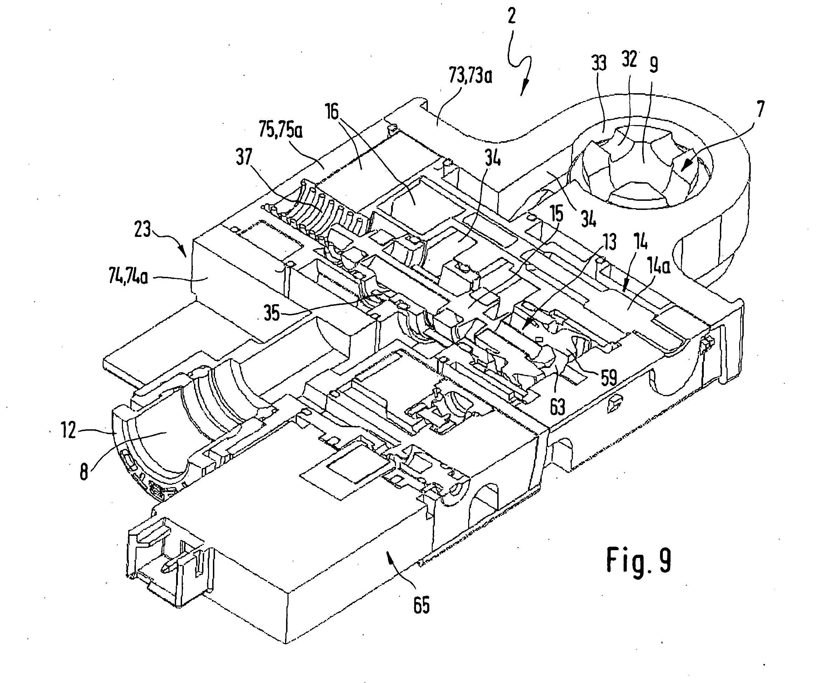

- Figur 9: den Längsschnitt der Figur 8 in ergänzender perspektivischer Darstellung,
- Figur 10: einen Querschnitt durch das Funktionsteil der Anschlussvorrichtung in einer zur Hauptachse rechtwinkeligen Schnittebene X-X aus Figur 8 und
- Figur 11: eine mit Figur 10 vergleichbare Querschnittsdarstellung, wobei die Schnittebene gemäß XI-XI aus Figur 8 verläuft.

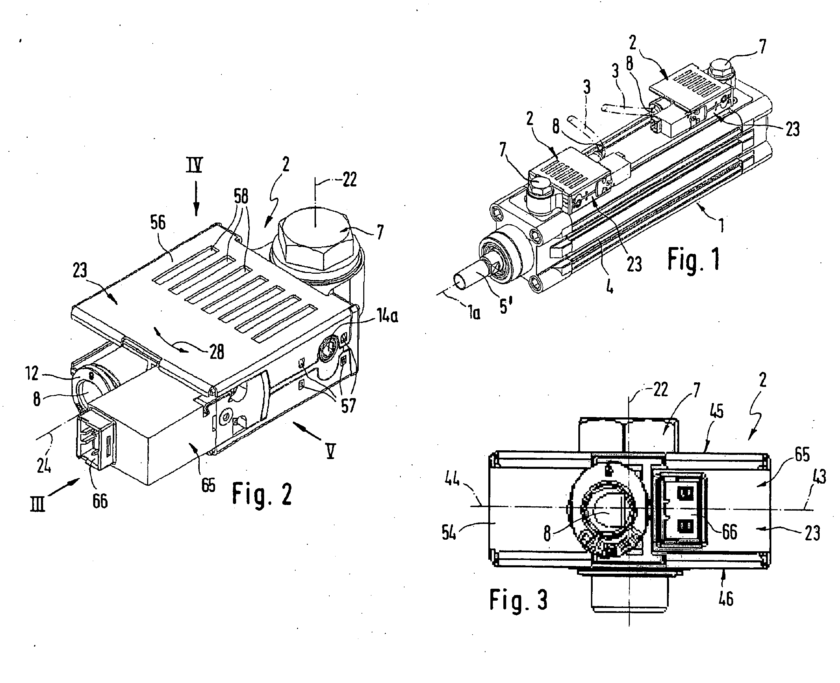

Aus Figur 1 geht eine Pneumatikzylinderanordnung mit einer pneumatischen Komponente in Gestalt eines Pneumatikzylinders 1 hervor, der mit zwei Anschlussvorrichtungen 2 einer bevorzugten erfindungsgemäßen Bauart bestückt ist, welche im Detail aus den übrigen Figuren ersichtlich sind. Jede Anschlussvorrichtung 2 ermöglicht es, den Pneumatikzylinder 1 mit einer Fluidleitung 3 zu verbinden, um für den Betrieb des Pneumatikzylinders 1 erforderliche Druckluft zuzuführen.

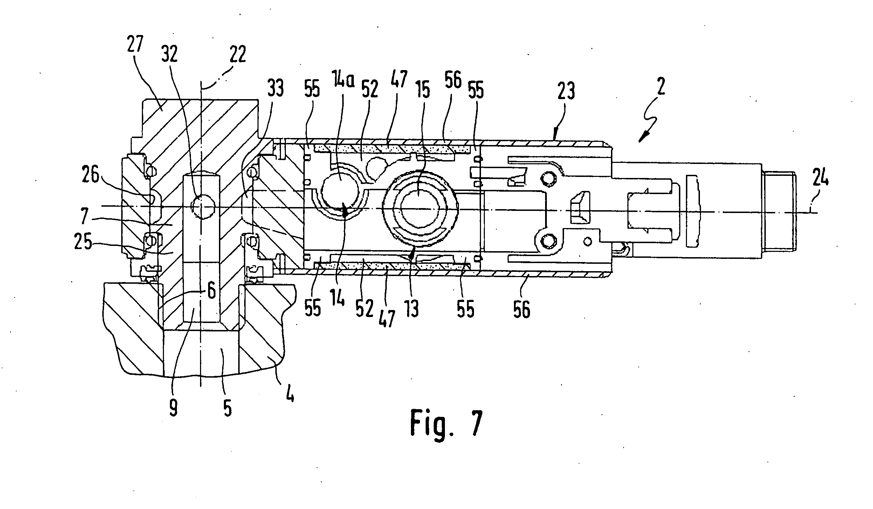

Der Pneumatikzylinder 1 verfügt über ein Zylindergehäuse 4 (siehe auch Figur 7), in dem ein nicht näher dargestellter Kolben verschiebbar angeordnet ist, der mit einer an einer Stirnseite des Zylindergehäuses 4 herausragenden Kolbenstange 5' verbunden ist. Der Kolben trennt im Zylindergehäuse 4 zwei Arbeitskammern voneinander ab, die jeweils mit einem Druckluftkanal 5 (Figur 7) verbunden sind, der über einen Kupplungsabschnitt 6 zur längsseitigen Außenfläche des Zylindergehäuses 4 ausmündet. An diesem Kupplungsabschnitt 6 ist jeweils eine der Anschlussvorrichtungen 2 über ein Befestigungsteil 7 lösbar fixiert.

Das Befestigungsteil 7 hat nicht nur eine Befestigungsfunktion, sondern dient auch der Luftführung der Druckluft in den Pneumatikzylinder 1 hinein und aus diesem heraus. Zu diesem Zweck definiert es einen mit dem Druckluftkanal 5 kommunizierenden Luftführungskanal 9.

Für den Anschluss der Druckluftleitung 3 besitzt die Anschlussvorrichtung 2 eine Leitungsanschlussöffnung 8, der Haltemittel 12 zugeordnet sind, die unter Abdichtung ein lösbares Fixieren der Druckluftleitung 3 gestatten. Die Haltemittel 12 sind insbesondere so ausgebildet, dass sie eine Steckkupplung definieren, die einen lösbaren Steckanschluss einer Druckluftleitung 3 ermöglicht.

Abweichend vom Ausführungsbeispiel, bei dem beiden Druckluftkanälen 5 je eine eigene Anschlussvorrichtung 2 zugeordnet ist, kann der Pneumatikzylinder 1 selbstverständlich auch mit nur einer Anschlussvorrichtung 2 bestückt sein, die dann an einem der beiden Druckluftkanäle 5 fixiert ist. An den anderen Druckluftkanal 5 ist in diesem Fall eine einfache Druckluftleitung angeschlossen, die zu einem externen Steuerventil führt oder die, vorzugsweise, an die vorhandene einzige Anschlussvorrichtung 2 angeschlossen ist und über diese mit Druckluft versorgt wird.

Die Anschlussvorrichtung 2 eignet sich zur Bestückung beliebiger pneumatischer Komponenten. Hierbei kann es sich neben dem erwähnten Pneumatikzylinder beispielsweise um andere Typen pneumatischer Antriebe handeln, aber auch um Ventile oder um zur Druckluftaufbereitung dienende sogenannte Wartungsgeräte.

Die Anschlussvorrichtung 2 dient nicht nur zum Herstellen der Druckluftverbindung und dem Führen der Druckluft, sondern ist durch die Ausstattung mit zumindest einer direkt oder indirekt elektrisch betätigbaren Steuerventileinrichtung 13 und vorzugsweise auch mindestens einer Drosseleinrichtung 14 in der Lage, aktiv mit der strömenden Druckluft zusammenzuwirken, um eine Zustandsänderung dieser Druckluft hervorzurufen.

Die Steuerventileinrichtung 13 ermöglicht eine gesteuerte Fluidbeaufschlagung der Leitungsanschlussöffnung 9 und mithin des daran angeschlossenen Druckluftkanals 5. Sie ist exemplarisch als 3/2-Wegeventil ausgebildet und kann, in Abhängigkeit von der Stellung seines wahlweise in unterschiedlichen Schaltstellungen positionierbaren Steuerventilgliedes 15, den Leitungsführungskanal 9 wahlweise mit der Leitungsanschlussöffnung 8 oder mit einem mit der Atmosphäre kommunizierenden Entlüftungskanal 16 verbinden.

Die Drosseleinrichtung 14 ist wirkungsmäßig in den Verlauf des Entlüftungskanals 16 eingeschaltet und ermöglicht auf diese Weise eine Abluftdrosselung. Dadurch kann die Verfahrgeschwindigkeit des angetriebenen Kolbens des Pneumatikzylinders 1 beeinflusst werden.

Um die Drosselungsintensität nach Bedarf variieren zu können, enthält die Drosseleinrichtung 14 eine Drosselschraube 14a, die beim Verdrehen eine Linearbewegung in Richtung ihrer als Schraubenachse 17 bezeichneten Längsachse ausführt und dadurch - je nach Verstellrichtung - den Querschnitt eines Drosseldurchlasses vergrößert oder verringert. Zur manuellen Betätigung weist sie einen von außen zugänglichen Betätigungsabschnitt 14b auf.

Die Längsachse des Befestigungsteils 7 sei als Befestigungsachse 22 bezeichnet. Die mindestens eine Leitungsanschlussöffnung 8 ist, wie auch die Steuerventileinrichtung 13 und die Drosseleinrichtung 14, Bestandteil eines insgesamt Flachgestalt aufweisenden Funktionsteils 23, das mit dem Befestigungsteil 7 zu einer Baugruppe zusammengefasst ist, wobei es in Richtung einer mit seiner Längsachse zusammenfallenden Hauptachse 24 rechtwinkelig zur Befestigungsachse 22 vom Befestigungsteil 7 wegragt.

Im an dem Pneumatikzylinder installierten Zustand der Anschlussvorrichtung 2 greift das Befestigungsteil 7 in den Kupplungsabschnitt 6 des im Zylindergehäuse 2 verlaufenden Druckluftkanals 5 ein und ist darin fixiert. Die Befestigungsachse 22 verläuft dabei in der Achsrichtung des Kupplungsabschnittes 6 und zweckmäßigerweise zugleich rechtwinkelig zu der Außenfläche des Zylindergehäuses 4, an der sich die Mündung des betreffenden Druckluftkanals 5 befindet. Dabei kann das Funktionsteil 23 so ausgerichtet sein, dass seine Hauptachse 24 parallel zur Längsachse 1a des Pneumatikzylinders 1 verläuft.

Das Befestigungsteil 7 könnte prinzipiell ein durch eine Steckbefestigung am Zylindergehäuse 4 fixierbares Teil sein. Insbesondere in diesem Fall wäre es möglich, das Befestigungsteil 7 einstückig mit dem Funktionsteil 23 auszubilden. Vorzugsweise ist das Befestigungsteil 7 jedoch eine Befestigungsschraube, die mit ihrem Schaft 25 eine kanalartige Durchbrechung 26 des Funktionsteils 23 durchsetzt und mit dem an der Unterseite des Funktionsteils 23 herausragenden Gewindeabschnitt des Schaftes 25 in ein komplementäres Innengewinde des Kupplungsabschnittes 6 eingeschraubt ist. Ein dabei an der Oberseite des Funktionsteils 18 anliegender Schraubenkopf 27 beaufschlagt das Funktionsteil 23 in Richtung der Befestigungsachse 22 und fixiert es am Zylindergehäuse 4.

Zumindest bei leicht gelöster Befestigungsschraube, zweckmäßigerweise aber auch im festgezogenen Zustand derselben, kann das Funktionsteil 23 gemäß Doppelpfeil 28 um die Befestigungsachse 22 verschwenkt werden, um die Leitungsanschlussöffnung 8 in die gewünschte winkelmäßige Ausrichtung zu bringen.

Der Luftführungskanal 9 könnte von Vertiefungen am Außenumfang des Befestigungsteils 7 gebildet sein. Beim Ausführungsbeispiel durchsetzt er das Befestigungsteil in seinem Innern von der dem Druckluftkanal 5 zugewandten Stirnfläche her ein Stück weit in axialer Richtung und spaltet sich dann in mehrere radiale Zweigkanäle 32 auf, die in einen das Befestigungsteil 7 innerhalb der Durchbrechung 26 konzentrisch umschließenden Ringraum 33 übergehen.

Der Ringraum 33 steht über einen im Funktionsteil 23 verlaufenden Arbeitskanal 34 mit einer Arbeitskammer 35 der Steuerventileinrichtung 13 in Fluidverbindung. Diese Arbeitskammer 35 ist in Richtung der Längsachse 36 des Steuerventilglieds 15 auf der einen Seite von einer mit dem Entlüftungskanal 16 verbundenen Entlüftungskammer 37 und auf der anderen Seite von einer über einen Speisekanal 42 mit der Leitungsanschlussöffnung 18 verbundenen Einspeisekammer 38 flankiert. Das in Richtung seiner Längsachse 36 bewegbare Steuerventilglied 15 - vorliegend als Sitzventilglied ausgebildet - verbindet die Arbeitskammer 35 in der einen Schaltstellung mit der Einspeisekammer 38 und in der anderen Schaltstellung mit der Entlüftungskammer 37, wobei sie von der jeweils anderen Kammer abgesperrt ist. Der angeschlossene Pneumatikzylinder 1 wird somit schaltstellungsabhängig entweder mit über die Druckluftleitung zugeführter Druckluft gespeist oder entlüftet.

Das Funktionsteil 23 hat wie erwähnt insgesamt eine flache Gestalt. Seine Hauptausdehnungsebene 43 verläuft rechtwinkelig zu der Befestigungsachse 22. Dadurch trägt es im an ein Zylindergehäuse 4 angebauten Zustand nur wenig auf.

Unter anderem aus Figur 3 ist ersichtlich, dass das Funktionsteil 23 quer zu seiner in Figur 3 senkrecht zur Zeichenebene stehenden Hauptachse 24 einen länglichen Querschnitt aufweist. Die Querschnitts-Längsachse 44 verläuft rechtwinkelig zur Befestigungsachse 22. Die Höhenrichtung des Funktionsteils 23 ist mit der Befestigungsachse 22 gleichgerichtet; die Höhenabmessungen sind wesentlich geringer als die in Richtung der Hauptachse 24 gemessenen Längenabmessungen und die in Richtung der Querschnitts-Längsachse 44 gemessenen Breitenabmessungen des Funktionsteils 23.

Die beiden einander entgegengesetzten, jeweils in der Achsrichtung der Befestigungsachse 22 orientierten Seiten des Funktionsteils 23 seien zur besseren Unterscheidung als Flachseiten 45, 46 bezeichnet. Die dortige Außenfläche des Funktionsteils 23 verläuft beim Ausführungsbeispiel parallel zu der Hauptausdehnungsebene 43.

Die Steuerventileinrichtung 13 ist ein unmittelbarer Bestandteil des Funktionsteils 23. Entsprechendes gilt vorzugsweise auch für die Drosseleinrichtung 14. Sowohl das Steuerventilglied 15 als auch die Drosselschraube 14a befinden sich im Innern des Funktionsteils 23.

Um das Ausströmgeräusch der über den Entlüftungskanal zur Atmosphäre ausströmenden Luft zu dämpfen, ist das Funktionsteil 23 mit Schalldämpfmitteln ausgestattet. Diese umfassen beim Ausführungsbeispiel zwei als Flächenschalldämpfer 47 bezeichnete plattenförmige Schalldämpfelemente, die in vorteilhafter Weise im Bereich der beiden Flachseiten 45, 46 des Funktionsteils 23 angeordnet sind. Sie erstrecken sich zumindest annähernd parallel zu der Hauptausdehnungsebene 43.

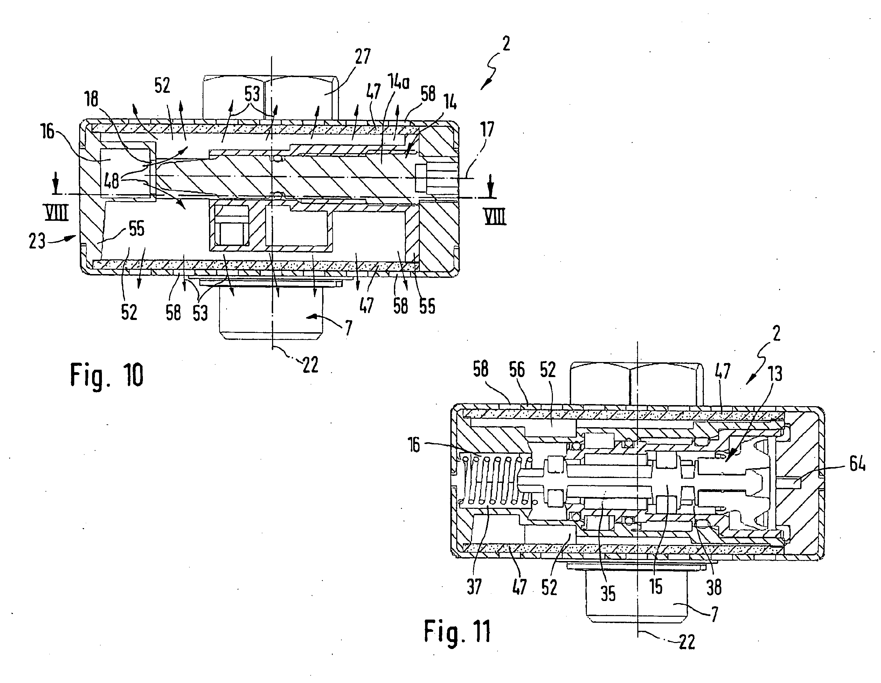

Insbesondere aus Figuren 7 und 10 ist gut ersichtlich, dass die beiden Flächenschalldämpfer 47 mit ein und demselben Entlüftungskanal 16 kommunizieren. Der über den Entlüftungskanal 16 ausströmende Luftstrom spaltet sich aufgrund einer entsprechenden Kanalführung im Innern des Funktionsteils 23 auf (Strömungspfeile 48) und gelangt in je eine vom zugeordneten Flächenschalldämpfer 47 überdeckte Abluftkammer 52. Von dort aus tritt sie gemäß Strömungspfeilen 53 durch den betreffenden Flächenschalldämpfer 47 hindurch ins Freie aus.

Die zur Hauptausdehnungsachse 43 parallele Querschnittsfläche der beiden Abluftkammern 52 ist zweckmäßigerweise zumindest annähernd so groß wie die Fläche des Flächenschalldämpfers 47. Dadurch kann sich die abströmende Druckluft optimal über die Schalldämpferfläche verteilen und mit reduzierter Strömungsgeschwindigkeit zur Atmosphäre austreten.

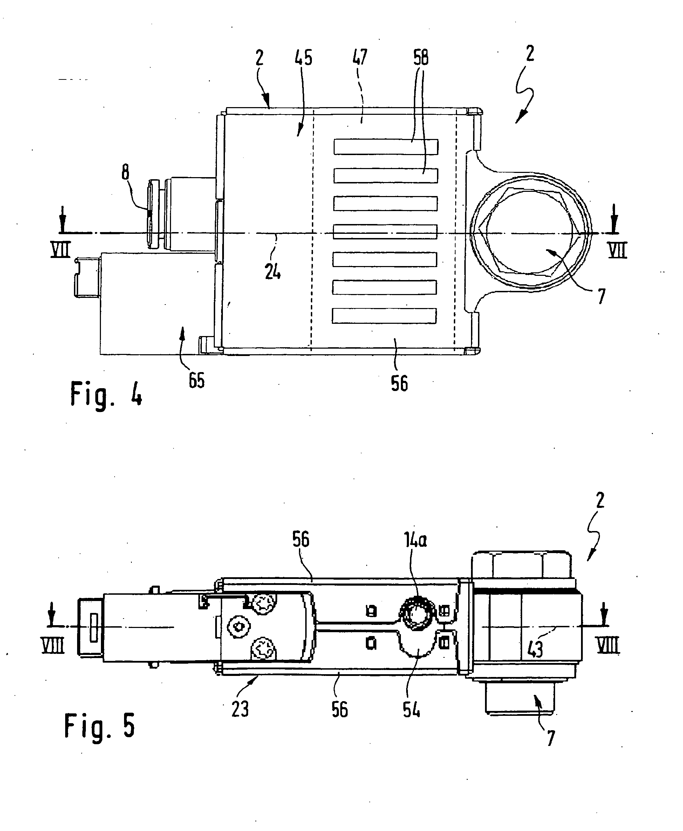

In Figur 4 ist gestrichelt angedeutet, dass sich ein jeweiliger Flächenschalldämpfer 47 vorzugsweise zumindest annähernd über die gesamte rechtwinkelig zur Hauptachse 24 gemessene Breite der zugeordneten Flachseite 45 erstreckt.

Vorzugsweise haben die Flächenschalldämpfer 47 jeweils einen rechteckigen Umriss.

Bei einer nicht näher dargestellten Ausführungsform ist an nur einer der beiden Flachseiten 45, 46 ein Flächenschalldämpfer 47 vorgesehen. Dies ist dann zweckmäßigerweise diejenige Seite, die im an einem Pneumatikzylinder 1 installierten Zustand vom Pneumatikzylinder 1 wegweist.

Der plattenförmige Flächenschalldämpfer 47 kann insbesondere aus einer porösen, biegesteifen Dämpfungsmaterialplatte bestehen, die beispielsweise aus Sintermaterial besteht. Er kann auch von einer flexiblen Schalldämpfmatte gebildet sein, beispielsweise bestehend aus einem gepressten Faserkörper oder aus einem porösen Schaumstoffkörper.

Das Funktionsteil 23 verfügt über ein insgesamt mit Bezugsziffer 54 bezeichnetes Funktionsteil-Gehäuse, das gleichzeitig als Gehäuse für die Steuerventileinrichtung 13 und die Drosseleinrichtung 14 fungiert. In ihm erstrecken sich, insbesondere in zueinander paralleler Ausrichtung, das Steuerventilglied 15 und die Drosselschraube 14a. Deren Ausrichtung ist bevorzugt so gewählt, dass ihre Längsachsen 17, 36 in oder parallel zu der Hauptausdehnungsebene 43 und zugleich rechtwinkelig zu der Hauptachse 24 verlaufen. Beide Längsachsen 36, 17 verlaufen hierbei mit Abstand zu der Befestigungsachse 22. In der Höhenrichtung 22 des Funktionsteils können sie zueinander versetzt sein.

Das Funktionsteil-Gehäuse 54 definiert im Innern unter anderem die beiden Abluftkammern 52, einschließlich einer die Abluftkammern 52 umrahmenden Begrenzungswand 55, auf der der zweckmäßigerweise insgesamt selbsttragende Flächenschalldämpfer 47 aufliegt.

Besonders kompakte Abmessungen des Funktionsteils 23 resultieren unter anderem daraus, dass zumindest das Steuerventilglied 15 und zweckmäßigerweise auch die Drosselschraube 14a in der Höhenrichtung des Funktionsteils 23 unterhalb der beiden Flächenschalldämpfer 47 angeordnet sind. Mit "unterhalt" ist hier gemeint, dass sich die Flächenschalldämpfer 47 über die vorgenannten Komponenten 15, 14a hinweg erstrecken. Bei dem eine Zweifachanordnung von Flächenschalldämpfern 47 aufweisenden Ausführungsbeispiel kommen die beiden Komponenten 15, 14a sandwichartig zwischen den den einander entgegengesetzten Flachseiten 45, 46 zugeordneten Flächenschalldämpfern 47 zu liegen.

Jeder Flächenschalldämpfer 47 kann direkt am Funktionsteil-Gehäuse 54 fixiert sein. Zweckmäßig ist jedoch auch eine mittelbare Befestigung mittels einer sie übergreifenden luftdurchlässigen Abdeckung 56, die ihrerseits - beispielsweise durch Rastverbindungsmittel 57 - direkt am Funktionsteil-Gehäuse 54 befestigt ist.

Exemplarisch ist jedem Flächenschalldämpfer 47 eine eigene Abdeckung 56 zugeordnet, die sich mit einem plattenartigen Abschnitt über den Flächenschalldämpfer 47 hinweg erstreckt. Die Luftdurchlässigkeit wird durch in diesem Abschnitt ausgesparte, beispielhaft langlochförmig ausgebildete Durchbrechungen 58 gewährleistet.

Andere Gestaltungsformen für die Durchbrechungen 58 sind ebenfalls möglich. Ferner kann es bei genügender Eigensteifigkeit der Flächenschalldämpfer 47 genügen, diese lediglich am Rand mittels eines umlaufenden Befestigungsrahmens gehäuseseitig zu fixieren.

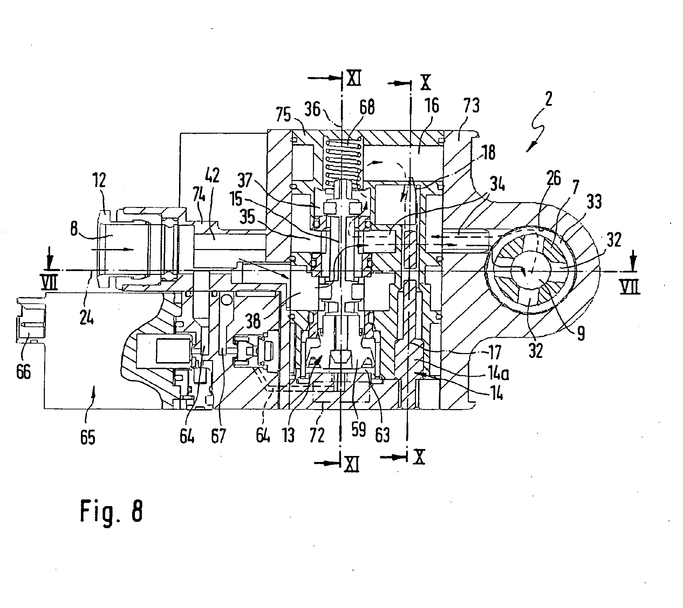

Die Steuerventileinrichtung ist vom indirekt elektrisch betätigbaren Typ. Ihr Steuerventilglied 15 besitzt mindestens einen, beispielsweise als Kolben ausgebildeten Beaufschlagungsabschnitt 59, der eine Vorsteuerkammer 63 begrenzt, die über einen in Figur 8 teilweise gestrichelt angedeuteten Vorsteuerkanal 64 mit dem Speisekanal 42 kommuniziert. In den Verlauf dieses Vorsteuerkanals 64 ist mindestens ein sich ebenfalls an Bord des Funktionsteils 23 befindendes und vorzugsweise einen unmittelbaren Bestandteil dieses Funktionsteils 23 darstellendes, elektrisch betätigbares Vorsteuerventil 65 eingeschaltet. Bei ihm handelt es sich vorzugsweise um ein Magnetventil. Es empfängt seine elektrischen Betätigungssignale über eine den Anschluss eines elektrischen Steuerkabels ermöglichende elektrische Schnittstelle 66, die bevorzugt an der dem Befestigungsteil 7 entgegengesetzten Vorderseite des Funktionsteils 23 platziert ist.

Enthält die Steuerventileinrichtung 13 mehrere Steuerventilglieder, ist auch eine entsprechende Mehrzahl von Vorsteuerventilen 65 vorhanden.

Entsprechend seinem Betätigungszustand gibt das Vorsteuerventil 65 entweder den Luftdurchgang durch den Vorsteuerkanal 64 frei - bei gleichzeitiger Abtrennung eines Vorsteuer-Entlüftungskanals 67 -, oder es unterbricht den Vorsteuerkanal 64, bei gleichzeitiger Verbindung des sich an die Vorsteuerkammer 63 anschließenden Vorsteuerkanalabschnittes mit dem Vorsteuer-Entlüftungskanal 67. Im Zusammenwirken mit einer das Steuerventilglied 15 beaufschlagenden Federeinrichtung 68 kann auf diese weise das Steuerventilglied 15 in der gewünschten Schaltstellung platziert werden.

Die Steuerventileinrichtung 13 kann alternativ auch vom direkt elektrisch betätigbaren Typ sein. In diesem Fall kann das Funktionsteil 23 eine in Figur 8 strichpunktiert angedeutete elektrische Antriebseinrichtung 72 enthalten, die direkt auf das Steuerventilglied 15 einwirken und dessen Schaltstellung vorgeben kann.

Es ist von Vorteil, wenn das mindestens eine Vorsteuerventil 65, in Richtung der Hauptachse 24 betrachtet, innerhalb des Umrisses des Funktionsteils 23 angeordnet ist. Diese Anordnung wird besonders aus Figur 3 gut deutlich.

Das Funktionsteil 23 hat zweckmäßigerweise einen modularen Aufbau, wobei es mehrere, in Richtung der Hauptachse 24 aneinandergereihte und miteinander verbundene Funktionsteilmodule umfasst. Diese Funktionsteilmodule beinhalten ein das Befestigungsteil 7 tragendes Befestigungsmodul 73, ein den entgegengesetzten axialen Abschluss des Funktionsteils 23 definierendes und mit der Leitungsanschlussöffnung 8 ausgestattetes Anschlussmodul 74 sowie ein zwischen diesen beiden Modulen 73, 74 angeordnetes, die Steuerventileinrichtung 13 und zweckmäßigerweise auch die Drosseleinrichtung 44 enthaltendes Steuermodul 75. Das Anschlussmodul 74 trägt auch das gegebenenfalls vorhandene mindestens eine Vorsteuerventil 65. Die Flächenschalldämpfer 47 sind zweckmäßigerweise Bestandteil des Steuermoduls 75.

Das Funktionsteil-Gehäuse 54 ist in mehrere, den einzelnen Funktionsteilmodulen 73, 74, 75 zugeordnete Gehäuseabschnitte 73a, 74a, 75a unterteilt. Sie sind durch beliebige Verbindungsmittel aneinander fixiert, beispielsweise Schrauben oder Klammern.

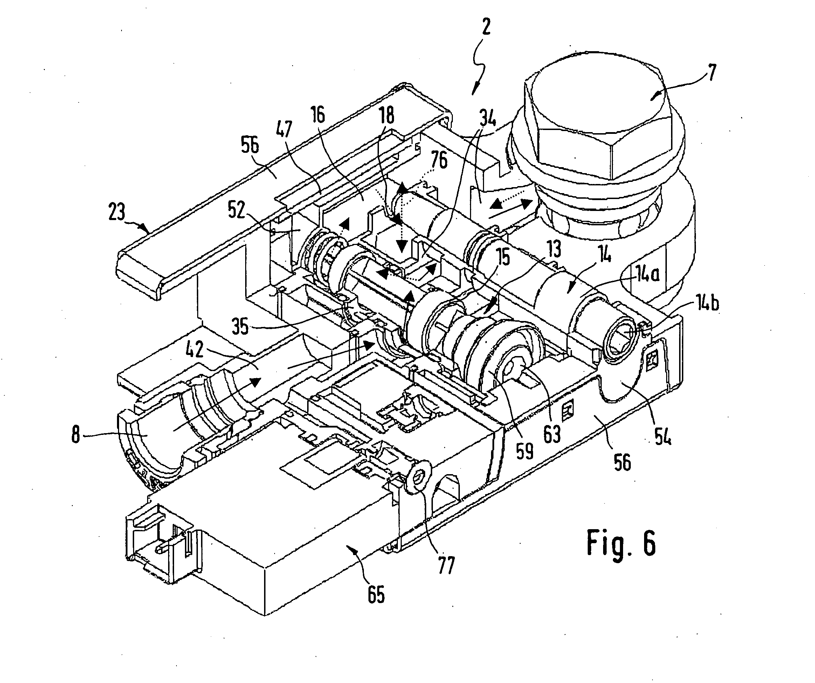

In Figur 6 ist nochmals der durch die Anschlussvorrichtung 2 ermöglichte Verlauf der Druckluftströmung angedeutet. Die Pfeile in durchgezogenen Linien vermitteln die Druckluftströmung von der Leitungsanschlussöffnung 8 in den Arbeitskanal 34 und von dort zum nicht sichtbaren Leitungsführungskanal 9. Der Arbeitskanal 64 ist dabei längsseits neben der Drosseleinrichtung 14 vorbeigeführt. Die gepunkteten Pfeile vermitteln die Rückströmung in der Entlüftungsstellung der Steuerventileinrichtung 13, wobei der Doppelpfeil 76 die nach dem Durchlaufen des Drosseldurchlasses 18 erfolgende Aufteilung der gedrosselten Druckluftströmung auf die beiden Flächenschalldämpfer 47 dokumentieren soll.

Bei 77 ist noch eine dem mindestens einen Vorsteuerventil 65 zugeordnete Handhilfsbetätigungseinrichtung ersichtlich. Sie ermöglicht ein manuelles Schalten des Vorsteuerventils 65 bei nicht vorhandenem elektrischem Betätigungssignal.

## Patentansprüche

1. Anschlussvorrichtung zum Anschließen mindestens einer Druckluftleitung (3) an eine pneumatische Komponente, beispielsweise einen Pneumatikzylinder, mit einem sich in Richtung einer Befestigungsachse (22) erstreckenden, zur Fixierung an der pneumatischen Komponente dienenden und gleichzeitig mindestens einen Luftführungskanal (9) definierenden Befestigungsteil (7), und mit einem in einer zu der Befestigungsachse (22) rechtwinkeligen Hauptachse (24) von dem Befestigungsteil (7) wegragenden, mindestens eine Leitungsanschlussöffnung (8) für eine anzuschließende Druckluftleitung (3) aufweisenden Funktionsteil (23), das Flachgestalt aufweist, mit einer zu der Befestigungsachse (22) rechtwinkeligen Hauptausdehnungsebene (43) und das mit mindestens einer mindestens ein Steuerventilglied (15) aufweisenden Steuerventileinrichtung (13) und mit mindestens einem Entlüftungskanal (16) der Steuerventileinrichtung (13) zugeordneten Schalldämpfmitteln ausgestattet ist, wobei die Steuerventileinrichtung (13) ein unmittelbarer Bestandteil des Funktionsteils (23) ist und das mindestens eine Steuerventilglied (15) im Innern des Funktionsteils (23) angeordnet ist, und wobei als Schalldämpfmittel mindestens ein plattenförmiger Flächenschalldämpfer (47) vorhanden ist, **dadurch gekennzeichnet, dass** das Funktionsteil (23) quer zu seiner Hauptachse (24) einen länglichen Querschnitt aufweist, wobei die Querschnitts-Längsachse (44) rechtwinkelig zur Befestigungsachse (22) verläuft, dass der plattenförmige Flächenschalldämpfer an mindestens einer der beiden in Achsrichtung der Befestigungsachse (22) orientierten Flachseiten (45, 46) des Funktionsteils (23) angeordnet ist, wobei sich seine Plattenebene zumindest annähernd parallel zu der Hauptausdehnungsebene (43) erstreckt, und dass die Steuerventileinrichtung (13) direkt oder indirekt elektrisch betätigbar ausgebildet ist.

2. Anschlussvorrichtung nach Anspruch 1, **dadurch gekennzeichnet, dass** der mindestens eine Flächenschalldämpfer (47) eine mit mindestens einem Entlüftungskanal (16) in Verbindung stehende Abluftkammer (52) überdeckt, deren parallel zur Hauptausdehnungsebene (43) gemessene Querschnittsfläche zweckmäßigerweise zumindest annähernd der Grundfläche des Flächenschalldämpfers (47) entspricht.

3. Anschlussvorrichtung nach Anspruch 1 oder 2, **dadurch gekennzeichnet, dass** sich der mindestens eine Flächenschalldämpfer (47) zumindest annähernd über die gesamte rechtwinkelig zur Hauptachse (24) gemessene Breite der zugeordneten Flachseite (45, 46) erstreckt.

4. Anschlussvorrichtung nach einem der Ansprüche 1 bis 3, **dadurch gekennzeichnet, dass** der mindestens eine Flächenschalldämpfer (47) einen rechteckigen Umriss aufweist.

5. Anschlussvorrichtung nach einem der Ansprüche 1 bis 4, **dadurch gekennzeichnet, dass** der mindestens eine Flächenschalldämpfer (47) von einer porösen Dämpfungsmaterialplatte gebildet ist, insbesondere einer Sintermaterialplatte.

6. Anschlussvorrichtung nach einem der Ansprüche 1 bis 5, **dadurch gekennzeichnet, dass** das Funktionsteil (23) an seinen beiden Flachseiten (45, 46) jeweils eine zu der Hauptausdehnungsebene (43) im Wesentlichen parallele Außenfläche besitzt.

7. Anschlussvorrichtung nach einem der Ansprüche 1 bis 6, **dadurch gekennzeichnet, dass** das mindestens eine Steuerven-tilglied (15) bei einem an beiden Flachseiten (45, 46) mit einem Flächenschalldämpfer (47) ausgestatteten Funktionsteil (23) in der Achsrichtung der Befestigungsachse (22) zwischen diesen beiden Flächenschalldämpfern (47) angeordnet ist.

8. Anschlussvorrichtung nach einem der Ansprüche 1 bis 7, **dadurch gekennzeichnet, dass** das mindestens eine Steuerventilglied (15) Längsgestalt aufweist, wobei es sich in oder parallel zu der Hauptausdehnungsebene (43) und hierbei rechtwinkelig zur Hauptachse (24) erstreckt.

9. Anschlussvorrichtung nach einem der Ansprüche 1 bis 8, **dadurch gekennzeichnet, dass** im Innern des Funktionsteils (23) eine Drosseleinrichtung (14) mit mindestens einer von außen her einstellbaren Drosselschraube (14a) angeordnet ist.

10. Anschlussvorrichtung nach Anspruch 9, **dadurch gekennzeichnet, dass** die Drosselschraube (14a) so ausgerichtet ist, dass ihre Schraubenachse (17) rechtwinkelig zu der Befestigungsachse (22) und dabei zweckmäßigerweise mit Abstand zu der Befestigungsachse (22) und rechtwinkelig zur Hauptachse (24) verläuft.

11. Anschlussvorrichtung nach Anspruch 9 oder 10, **dadurch gekennzeichnet, dass** die Drosseleinrichtung (14) eine Abluftdrosseleinrichtung ist, wobei die Drosselschraube (14a) mit dem Entlüftungskanal (16) kooperiert.

12. Anschlussvorrichtung nach einem der Ansprüche 9 bis 11, **dadurch gekennzeichnet, dass** sich der mindestens eine Flächenschalldämpfer (47), in der Achsrichtung der Befestigungsachse (22) betrachtet, über die Drosselschraube (14a) hinweg erstreckt.

13. Anschlussvorrichtung nach einem der Ansprüche 1 bis 12, **dadurch gekennzeichnet, dass** das Funktionsteil (23) modular aufgebaut ist und sich aus mehreren, in Richtung der Hauptachse (24) aneinandergereihten Funktionsteilmodulen zusammensetzt, unter denen sich ein dem Befestigungsteil (7) zugeordnetes Befestigungsmodul (73), ein die mindestens eine Leitungsanschlussöffnung (8) aufweisendes Anschlussmodul (74) und ein zwischen diesen beiden Modulen (73, 74) angeordnetes, die Steuerventileinrichtung (13) enthaltendes Steuermodul (75) befindet.

14. Anschlussvorrichtung nach Anspruch 13, **dadurch gekennzeichnet, dass** das Steuermodul (75) auch die Drosseleinrichtung (14) beinhaltet.

15. Anschlussvorrichtung nach Anspruch 13 oder 14, **dadurch gekennzeichnet, dass** der mindestens eine Flächenschalldämpfer (47) ausschließlich an dem Steuermodul (75) angeordnet ist.

16. Anschlussvorrichtung nach einem der Ansprüche 1 bis 15, **dadurch gekennzeichnet, dass** das Befestigungsteil (7) als das Funktionsteil (23) durchsetzende Befestigungsschraube ausgebildet ist.

17. Pneumatikzylinderanordnung, **gekennzeichnet durch** einen Pneumatikzylinder (1) mit einem Zylindergehäuse (4), an das unter Vermittlung eines Befestigungsteils (7) mindestens eine nach einem der Ansprüche 1 bis 16 ausgestattete Anschlussvorrichtung (2) angebaut ist.

## Claims

1. Connection device for the connection of at least one compressed air line (3) to a pneumatic component, for example a pneumatic cylinder, with a mounting part (7) extending in the direction of a mounting axis (22), serving for fixing to the pneumatic component and simultaneously defining at least one air guidance passage (9), and with a function part (23) extending away from the mounting part (7) in a main axis (24) at right-angles to the mounting axis (22) and having at least one connection port (8) for a compressed air line (3) to be connected, and with a flat shape, with a main extension plane (43) at right-angles to the mounting axis (22) and equipped with at least one control valve device (13) having at least one control valve element (15) and with silencer means assigned to at least one vent passage (16) of the control valve device (13), wherein the control valve device (13) is an integral part of the function part (23) and the control valve element or elements (15) is or are located in the interior of the function part (23), and wherein at least one plate-shaped flat silencer (47) is provided as silencer means, **characterised in that** the function part (23) has an elongated cross-section at right-angles to its main axis (24), wherein the cross-section longitudinal axis (44) runs at right-angles to the mounting axis (22), that the plate-shaped flat silencer (47) is provided on at least one of the two flat sides (45, 46) of the function part (23) oriented in the axial direction of the mounting axis (22), wherein its plate plane extends at least approximately parallel to the main extension plane (43), and that the control valve device (13) is designed to be directly or indirectly electrically actuable.

2. Connection device according to claim 1, **characterised in that** the flat silencer or silencers (47) cover(s) an exhaust air chamber (52) connected to one or more vent passages (16) and with a cross-sectional area measured parallel to the main extension plane (43) which corresponds expediently to at least approximately the base area of the flat silencer (47).

3. Connection device according to claim 1 or 2, **characterised in that** the flat silencer or silencers (47) extend(s) at least approximately over the whole width of the assigned flat side (45, 46) measured at right-angles to the main axis (24).

4. Connection device according to any of claims 1 to 3, **characterised in that** the the flat silencer or silencers (47) has or have a rectangular shape.

5. Connection device according to any of claims 1 to 4, **characterised in that** the flat silencer or silencers (47) is or are formed by a porous damping material plate, in particular a sintered material plate.

6. Connection device according to any of claims 1 to 5, **characterised in that** the function part (23) has on each of its two flat sides (45, 46) an outer surface substantially parallel to the main extension plane (43).

7. Connection device according to any of claims 1 to 6 **characterised in that** the control valve element or elements (15), in the case of a function part (23) equipped with a flat silencer (47) on both flat sides (45, 46), is located between these two flat silencers (47) in the axial direction of the mounting axis (22).

8. Connection device according to any of claims 1 to 7, **characterised in that** the control valve element or elements (15) has or have an elongated shape, wherein it or they extend in or parallel to the main extension plane (43) and in so doing at right-angles to the main axis (24).

9. Connection device according to any of claims 1 to 8, **characterised in that** a restrictor device (14) with at least one restrictor screw (14a) adjustable from the outside is fitted inside the function part (23).

10. Connection device according to claim 9, **characterised in that** the restrictor screw (14a) is so aligned that its screw axis (17) runs at right-angles to the mounting axis (22) and at the same time expediently with clearance from the mounting axis (22) and at right-angles to the main axis (24).

11. Connection device according to claim 9 or 10, **characterised in that** the restrictor device (14) is an exhaust air restrictor device in which the restrictor screw (14a) cooperates with the vent passage (16).

12. Connection device according to any of claims 9 to 11, **characterised in that** the flat silencer or silencers (47), viewed in the axial direction of the mounting axis (22), extends or extend beyond the restrictor screw (14a).

13. Connection device according to any of claims 1 to 12, **characterised in that** the function part (23) is modular in form and is comprised of several function part modules lined up side by side in the direction of the main axis (24) and including a mounting module (73) assigned to the mounting part (7), a connection module (74) with the line connection port or ports (8), and a control module (75) mounted between these two modules (73, 74) and containing the control valve device (13).

14. Connection device according to claim 13, **characterised in that** the control module (75) also contains the restrictor device (14).

15. Connection device according to claim 13 or 14, **characterised in that** the flat silencer or silencers (47) is or are located solely on the control module (75).

16. Connection device according to any of claims 1 to 15, **characterised in that** the mounting part (7) is in the form of the mounting bolt passing through the function part (23).

17. Pneumatic cylinder assembly, **characterised by** a pneumatic cylinder (1) with a cylinder housing (4) to which is attached, through the agency of a mounting part (7), at least one connection device (2) equipped according to any of claims 1 to 16.

## Revendications

1. Dispositif de raccordement servant à raccorder au moins une conduite d'air comprimé (3) à un composant pneumatique, par exemple à un vérin pneumatique, comprenant une partie de fixation (7) s'étendant en direction d'un axe de fixation (22), destinée à être fixée à la composante pneumatique et définissant ce faisant au moins un canal de guidage d'air (9), et comprenant une partie fonctionnelle (23) dépassant de la partie de fixation (7) dans un axe principal (24) situé à angle droit par rapport à l'axe de fixation (22), présentant au moins un orifice de raccordement de conduite (8) pour une conduite d'air comprimé (3) à raccorder, laquelle partie fonctionnelle présente une forme plate et un plan d'extension principal (43) situé à angle droit par rapport à l'axe de fixation (22) et qui est équipée d'au moins un système de soupape de commande (13) présentant au moins une organe de soupape de commande (15) et de moyens d'atténuation de bruit associés au moins à un canal de ventilation (16) du système de soupape de commande (13), sachant que le système de soupape de commande (13) fait partie intégrante directement de la partie fonctionnelle (23) et que l'organe de soupape de commande (15) au moins au nombre de un est disposé à l'intérieur de la partie fonctionnelle (23), et sachant qu'est présent en tant que moyen d'atténuation du bruit au moins une système d'atténuation de bruit de surfaces (47) en forme de panneau, **caractérisé en ce que** la partie fonctionnelle (23) présente une section transversale allongée de manière transversale par rapport à son axe principal (24), sachant que l'axe longitudinal (44) de la section transversale s'étend à angle droit par rapport à l'axe de fixation (22), **en ce que** le système d'atténuation de bruit de surfaces en forme de plaque est disposé au niveau au moins d'un des deux côtés plats (45, 46), orientés dans la direction axiale de l'axe de fixation (22), de la partie fonctionnelle (23), sachant que son plan de plaque s'étend au moins approximativement de manière parallèle par rapport au plan d'extension principal (43), et **en ce que** le système de soupape de commande (13) est réalisé de manière à pouvoir être actionné directement ou indirectement de manière électrique.

2. Dispositif de raccordement selon la revendication 1, **caractérisé en ce que** le système d'atténuation de bruit de surfaces (47) au moins au nombre de un recouvre une chambre d'air d'évacuation (52) se trouvant en liaison avec au moins un canal de ventilation (16), dont la surface de section de transversale mesurée de manière parallèle par rapport au plan d'extension principal (43) correspond de manière appropriée au moins de manière approximative à la surface de base du système d'atténuation de bruit de surfaces (47).

3. Dispositif de raccordement selon la revendication 1 ou 2, **caractérisé en ce que** le système d'atténuation de bruit de surfaces (47) au moins au nombre de un s'étend au moins de manière approximative sur toute la largeur du côté plat (45, 46) associé, mesurée à angle droit par rapport à l'axe principal (24).

4. Dispositif de raccordement selon l'une quelconque des revendications 1 à 3, **caractérisé en ce que** le système d'atténuation de bruit de surfaces (47) présente un contour rectangulaire.

5. Dispositif de raccordement selon l'une quelconque des revendications 1 à 4, **caractérisé en ce que** le système d'atténuation de bruit de surfaces (47) est formé par une plaque de matériau d'atténuation poreuse, en particulier par une plaque de matériau fritté.

6. Dispositif de raccordement selon l'une quelconque des revendications 1 à 5, **caractérisé en ce que** la partie fonctionnelle (23) comprend au niveau de ses deux côtés plats (45, 46) respectivement une surface extérieure essentiellement parallèle par rapport au plan d'extension principal (43).

7. Dispositif de raccordement selon l'une quelconque des revendications 1 à 6, **caractérisé en ce que** l'organe de soupape de commande (15) au moins au nombre de un est disposé dans le cas d'une partie fonctionnelle (23) équipée au niveau des deux côtés plats (45, 46) d'un système d'atténuation de bruit de surfaces (47), dans la direction axiale de l'axe de fixation (22) entre lesdits deux systèmes d'atténuation de bruit de surfaces (47).

8. Dispositif de raccordement selon l'une quelconque des revendications 1 à 7, **caractérisé en ce que** l'organe de soupape de commande (15) au moins au nombre de un présente une forme longitudinale, sachant qu'il s'étend dans le plan d'extension principal (43) ou de manière parallèle par rapport à ce dernier et dans le cas présent à angle droit par rapport à l'axe principal (24).

9. Dispositif de raccordement selon l'une quelconque des revendications 1 à 8, **caractérisé en ce qu'**un système d'étranglement (14) doté au moins d'une vis d'étranglement (14a) pouvant être ajustée depuis l'extérieur est disposé à l'intérieur de la partie fonctionnelle (23).

10. Dispositif de raccordement selon la revendication 9, **caractérisé en ce que** la vis d'étranglement (14a) est installée de telle manière que son axe de vissage (17) s'étend à angle droit par rapport à l'axe de fixation (22) et s'étend dans ce cadre de manière appropriée à distance de l'axe de fixation (22) et à angle droit par rapport à l'axe principal (24).

11. Dispositif de raccordement selon la revendication 9 ou 10, **caractérisé en ce que** le système d'étranglement (14) est un système d'étranglement d'air d'évacuation, sachant que la vis d'étranglement (14a) coopère avec le canal de ventilation (16).

12. Dispositif de raccordement selon l'une quelconque des revendications 9 à 11, **caractérisé en ce que** le système d'atténuation de bruit de surfaces (47) au moins au nombre de un, vu dans la direction axiale de l'axe de fixation (22), s'étend au-delà de la vis d'étranglement (14a).

13. Dispositif de raccordement selon l'une quelconque des revendications 1 à 12, **caractérisé en ce que** la partie fonctionnelle (23) présente une structure modulaire et se compose de plusieurs modules de partie fonctionnelle alignés en direction de l'axe principal (24), parmi lesquels se trouvent un module de fixation (73) associé à la partie de fixation (7), un module de raccordement (74) présentant l'orifice de raccordement de conduite (8) au moins au nombre de un et un module de commande (75) disposé entre les deux modules précédents (73, 74) et contenant le système de soupape de commande (13).

14. Dispositif de raccordement selon la revendication 13, **caractérisé en ce que** le module de commande (75) comporte également le système d'étranglement (14).

15. Dispositif de raccordement selon la revendication 13 ou 14, **caractérisé en ce que** le système d'atténuation de bruit de surfaces (47) au moins au nombre de un est disposé exclusivement au niveau du module de commande (75).

16. Dispositif de raccordement selon l'une quelconque des revendications 1 à 15, **caractérisé en ce que** la partie de fixation (7) se présente sous la forme d'une vis de fixation traversant la partie fonctionnelle (23).

17. Ensemble vérin pneumatique, **caractérisé par** un vérin pneumatique (1) doté d'un carter de vérin (4), au niveau duquel est installé, par l'entremise d'une partie de fixation (7), au moins un dispositif de raccordement (2) équipé selon l'une quelconque des revendications 1 à 16.
